# EUROPEAN PATENT APPLICATION

(11) **EP 0 936 768 A2**
(43) Date of publication of application: **18.08.1999**
(21) Application number: 98309936.7
(22) Date of filing: 04.12.1998
(51) Int. Cl.: H04J 14/02, H04B 10/20

(54) **Optical wavelength multiplex device with add drop multiplexer**

(30) Priority: 04.12.1997 JP 33378797
(71) Applicant: NEC CORPORATION, Tokyo (JP)
(72) Inventor: Kaneko, Tomoyuki, Minato-ku, Tokyo (JP)
(74) Representative: Moir, Michael Christopher

(57) **Abstract**

An optical wavelength multiplex device comprising an ADM (add-drop multiplexer) (11), that is, an optical ADM device comprises additionally wavelength detection supplement means (12) to the ADM. The ADM extracts an optical signal of a particular wavelength only from an optical wavelength multiplexed signal, and adds an optical signal of the same wavelength as the above at the same time. Further, the wavelength detection supplement means detects the number of wavelengths or lacking wavelengths in the case of missing of the wavelengths for the predetermined number included in the optical signal received from the ADM to produce a lack information of the wavelengths. And according to the lack information, the above means further produces a supplemented optical signal added at least one wavelength so as to supplement any variation for signal level caused by the lack of wavelengths.

## Description

### Background of the Invention:

This invention relates to an optical wavelength multiplex device with an ADM (add-drop multiplexer), which extracts an optical signal of a particular wavelength only from optical wavelength multiplexed signals and adds an optical signal of the same wavelength as the above.

Herein, it is to be noted in the present invention that the optical wavelength multiplex device with the ADM can supply multiplexed optical signal at a stable level to an optical amplifier, even if a number of the wavelengths of the output optical signal is changed from a predetermined number. The optical amplifier amplifies and outputs the signals received from the optical wavelength multiplex device.

Recently, an optical fiber transmission system using optical fibers as transmission lines tends to be widely introduced in various fields of main transmission lines, because it has many merits such as a wide band, low loss, electromagnetic interference proof, etc. Especially, the transmission system using optical wavelength multiplex has such characteristics that can transmit independently many signals on one transmission line, and has been widely adopted. Consequently the optical wavelength multiplex network making use of optical wavelength multiplex signals has been studied as a large capacity system of a future telecommunication network.

In the optical wavelength multiplex network, a plurality of optical signals is wavelength multiplexed and transmitted through an optical fiber. The wavelength of the optical signal designates a destination in the network. On the other hand, regarding to the optical telecommunication system, some optical amplifiers are normally inserted into an optical path, for the sake of extension of signal transmission distance or compensation of optical signal attenuation in each junction point.

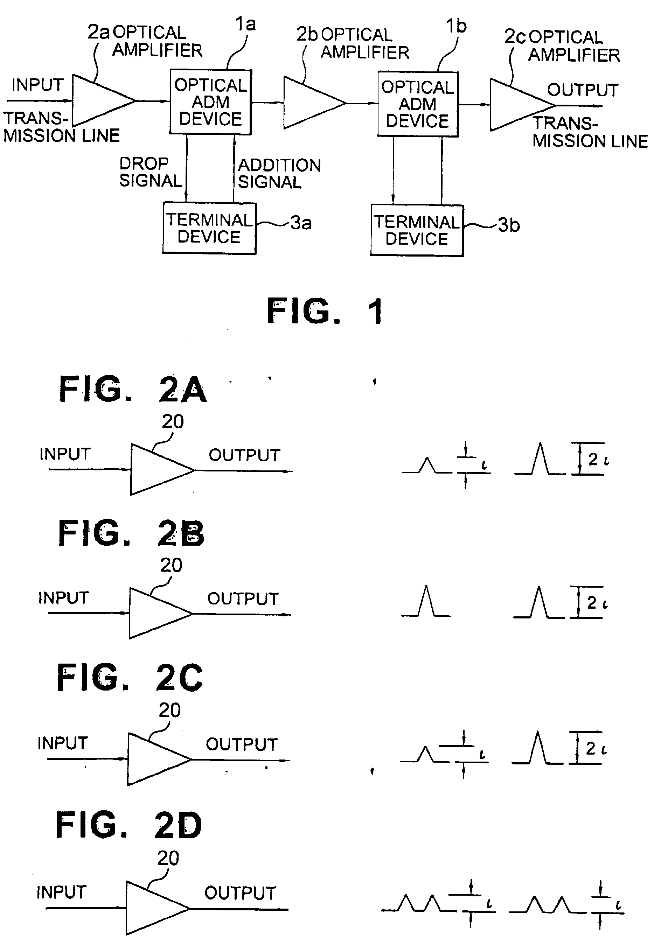

Now, the above-described optical wavelength multiplex device with ADM will be called an optical ADM device. And the optical ADM device needs an optical amplifier on a transmission line as illustrated in Fig. 1 in the above-described optical wavelength multiplex network.

Referring to Fig. 1, for example, an optical amplifier 2a is provided in a transmission line input and an optical ADM device 1a, an optical amplifier 2b, an optical ADM device 1b, and an optical amplifier 2c are serially supplied in order. The optical ADM device 1a is a branch office and makes a drop signal which is an optical signal of wavelength designated for a terminal device 3a where is a telecommunication destination, and which is extracted from the input signals. The other hand, the optical ADM device 1a inserts and multiplexes an addition signal received from the terminal device 3a to the signals which go through this device 1a and are excepted the above drop signal from, and sends out to the optical amplifier 2b. The addition signal has the wavelength designated for a terminal device 3a.

The optical signal sent out from the optical ADM device 1a through the optical amplifier 2b is transmitted through the optical ADM device 1b and the optical amplifier 2c and sent out to a transmission line. And the optical ADM device 1b also extracts and drops a drop signal, and inserts an addition signal with the wavelength designated for a terminal device 3b.

Referring to Figs. 2A through 2D, description will be made about characteristics of a conventional optical amplifier 20.

As illustrated in Figures, the optical amplifier 20 has characteristics of a constant output level control, which keeps an output level constant even if wavelength level of input signal changes. For example, the optical amplifier 20 always gains the constant output level "2ℓ", even if an optical input signal has different level such as a wavelength input level "ℓ" illustrated in Fig. 2A. In case of a wavelength input level "2ℓ" in Fig. 2B or a wavelength input level of less than level "ℓ" in Fig. 2C also, the constant output level "2ℓ" is obtained for output.

On the other hand, in case of too optical signal of input level "ℓ" as illustrated in Fig. 2D, the constant output level "2ℓ" is divided to two. Consequently, optical signal is output with wavelengths each of which has level "ℓ" respectively.

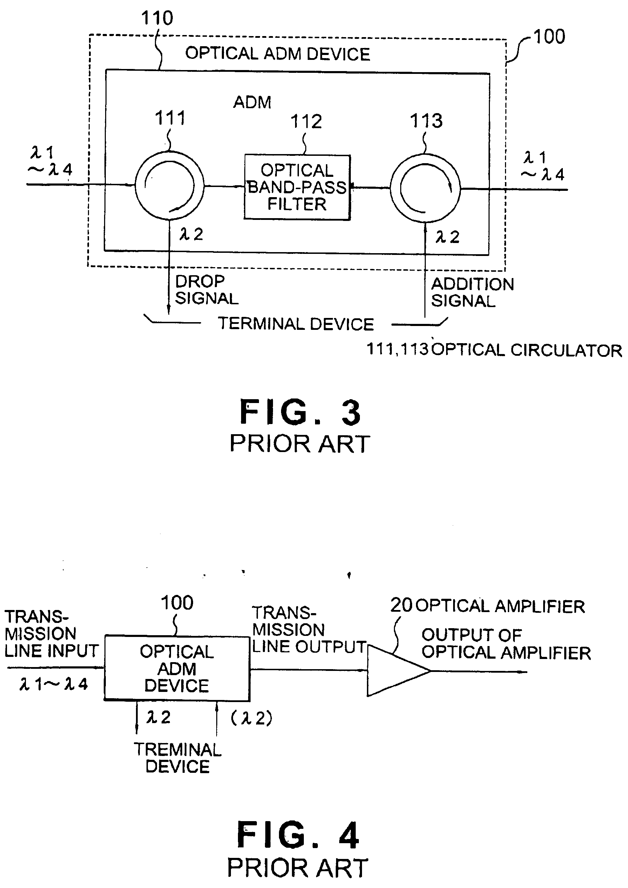

Referring to Fig. 3, a conventional optical ADM device has an ADM 110 comprising two optical circulators 111 and 113 provided in input side and output side respectively, and an optical band-pass filter 112.

For example as illustrated in Fig. 3, optical wavelength multiplexed signal including four wavelengths λ1 through λ4 is input to the optical circulator 111. In the optical circulator 111, an optical signal with wavelength λ2 is extracted as a drop signal to a terminal device and the other optical signal with the different wavelengths from λ2 are passing through the optical band-pass filter 112. The optical circulator 113 receives the optical signal passing through the optical band-pass filter 112, inserts an addition signal with the wavelength λ2 received from the terminal device to the optical signal, and outputs the wavelength λ2 inserted optical signal or optical wavelength multiplexed signals with four wavelengths λ1 through λ4.

Referring to Figs. 4 through 5B and additionally to Figs. 1 through 3, description will be made for characteristics, of the optical amplifier 20 illustrated in Fig. 2 connected with transmission line output of the optical ADM device 100 illustrated in Fig. 3.

As illustrated in Fig. 4, the optical ADM device 100 receives the wavelength multiplexed optical signal with four wavelengths λ1 through λ4 as transmission input. Consequently, the optical ADM device 100 extracts and inserts the λ2 wavelength optical signal for the terminal device, and sends out the wavelength multiplexed optical signal as transmission output to the optical amplifier 20. The optical amplifier 20 controls to make constantly the output level of the wavelength multiplexed optical signal.

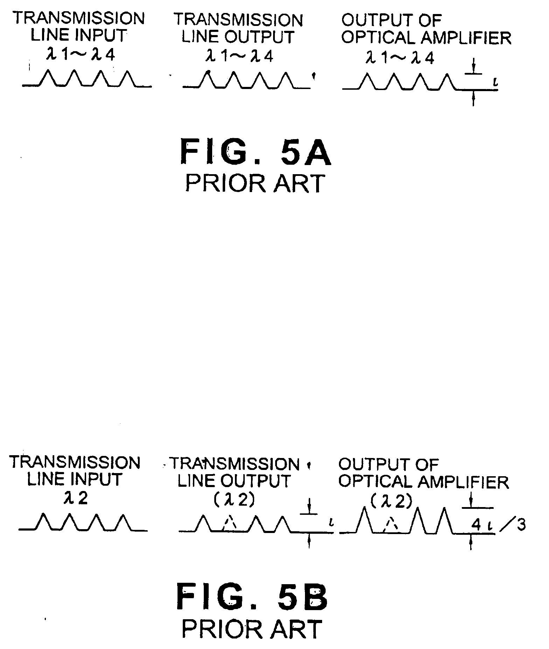

As illustrated in Fig. 5A, in the case that there is the optical wavelength multiplexed signal with four wavelengths λ1 through λ4 in the transmission line output, the optical amplifier outputs optical wavelength multiplexed signal with four wavelengths λ1 - λ4 each of which has the same wavelength level "ℓ".

On the other hand, referring to Fig. 5B, description will be made about the case that a wavelength λ2 lacks from the optical wavelength multiplexed signal with four wavelengths λ1 - λ4 in the transmission line output. As illustrated in Fig. 5B, the optical amplifier outputs optical wavelength multiplexed signal having three wavelengths λ1, λ3, and λ4 only. And each optical multiplexed signal has the same wavelength level "4 x ℓ/3" dividing a total sum level "4 x ℓ" into three parts, by reason of characteristics of a constant output level control.

In the conventional optical ADM device described above, it is a disadvantage of the above system that a probability of signal error occurrence is big in the case that the ADM device connects to the optical amplifier having characteristics of a constant output level control. For example, at the time of sending out an optical wavelength multiplexed signal through the transmission line output, it is such the case that there is any lack of wavelength for the sake of no optical signal in packet communication system wherein burst optical signal exist on a transmission line.

The reason will he described followings about the case that the number "m" of wavelengths lacks in the wavelength optical multiplexed signal against a constant output level "n x ℓ" or a wavelength level "ℓ" given to the optical wavelength multiplexed signal having the number "n" of wavelengths. An output wavelength level of each wavelength in the optical wavelength multiplexed signal output from the optical amplifier varies to "n/(n-m)" times of the each wavelength level "ℓ" for the predetermined number "n". This causes that the best appropriate design condition can not obtain. That is, in a system construction, especially, at a tee of construction of long distance transmission line, a design of signal-noise ratio (S/N) is important And furthermore, the probability of error occurrence becomes higher by variety of signal level according to variation of the number of wavelengths input into the optical amplifier.

On the other hand, even if there is any lack of wavelengths by reason of no optical signal, it is possible to make a constant level of the wavelength output from the optical amplifier by means of some additional feature to the optical amplifier. However, this additional feature needs some modification of the existing optical amplifier and moreover it is not possible to resolve by simply adding of structural element to the existing system without any modification.

### Summary of the Invention:

It is an object of at least the preferred embodiments of this invention to provide an optical ADM device, which is used for an optical wavelength multiplex device with an ADM (add-drop multiplexer), and which can prevent any signal level to vary by means of supply of optical signal having a stable level output to an optical amplifier with some simple additional features, even if the number of wavelengths in the optical wavelength multiplexed signal output from the ADM is less than a predetermined number.

An aspect of the invention is set out in claim 1. Some preferred features are set out in the dependent claims.

According to an embodiment of this invention, an optical ADM device comprises additionally a wavelength detection supplement means to the ADM. The ADM extracts only an optical signal of a particular wavelength from an optical wavelength multiplexed signal and adds an optical signal of the same wavelength extracted at the same time. Further, the wavelength detection supplement means detects whether or not input wavelengths included in the optical signal sent from the ADM are equal in number to a predetermined number and further detects a lack number signal of wavelengths or lack wavelength information as a lack information of the wavelengths in the case of missing of the wavelengths for the predetermined number in the optical signal received from the ADM to produce a lack information or a supplement signal. And, according to the lack information, the above wavelength detection supplement means adds at least one wavelength to the optical signal sent from the ADM so as to supplement any variation for signal level caused by the lack of wavelengths to produce a supplemented optical signal.

By such the structure as described above, the optical ADM device can minimize or prevent any variation of the signal level against total sum of optical amplifier output, because total sum level for the predetermined number of wavelengths always can input to the optical amplifier.

In the above optical ADM device, an embodiment of the above wavelength detection supplement means comprises an optical branching coupler, a lack number detection circuit, a lack wavelength supplement circuit, and an optical combining coupler. The optical branching coupler splits optical signal received from the ADM into two ways of the lack number detection circuit and the optical combining coupler. The lack number detection circuit receives the signals sent from the optical branching coupler and detects and sends out the number of lacking wavelengths to the lack wavelength supplement circuit. The lack wavelength supplement circuit receives the number of lacking wavelengths and produces a supplement optical signal added at least one wavelength so as to supplement any variation for signal level caused by the lacking wavelengths. The optical combining coupler combines a combined output signal by the received signals sent from both the optical branching coupler and the lack wavelength supplement circuit.

Another embodiment of the above wavelength detection supplement means comprises an optical branching coupler, a lack wavelength detection circuit, a lack wavelength supplement circuit, and optical combining coupler. The difference from the above embodiment is of the lack wavelength detection circuit provided instead of the lack number detection circuit. The lack wavelength detection circuit detects lacking wavelengths against the predetermined wavelength, to receive, produces a lack wavelength information representative of the lacking wavelengths, and sends out the lack wavelength information to the lack wavelength supplement circuit. The lack wavelength supplement circuit produces and sends out a supplement optical signal with the lacking wavelengths obtained from the lack wavelength information. Accordingly, the optical combining coupler can output the optical wavelength multiplexed signal with the predetermined wavelengths.

The other embodiment of the above wavelength detection supplement means comprises a wavelength detection circuit and an optical signal transmitting circuit. The wavelength detection circuit has a wavelength separator that separates the optical signal sent from the ADM into individual wavelengths and sends out the separated optical signals to the optical signal transmitting circuit. The optical signal transmitting circuit has a light emitting driver and a wavelength multiplexer. The light emitting driver receives the optical signals corresponding to wavelength respectively from the wavelength detection circuit to emit optical signals corresponding to each of the wavelengths with determined level, to detect a lacking wavelength, and to produce the supplemented optical signal. Accordingly, the wavelength multiplexer can multiplex and output the predetermined number of wavelengths with the same level.

### Brief Description of the Drawing:

Fig. 1 is a connection diagram of one example of a transmission line network adopting optical amplifiers;
Figs. 2A through 2D are connection and waveform diagrams of examples of amplification feature of optical amplifier;
Fig. 3 is a block diagram of one example of a conventional optical ADM device;
Fig. 4 is a connection diagram of an optical amplifier with the conventional device illustrated in Fig. 3;
Figs. 5A and 5B are waveform, diagrams showing optical amplification characteristics against lack wavelength by the conventional device illustrated in Fig. 4.
Fig. 6 is a block diagram of an optical ADM device according to a basic embodiment of the invention;
Fig. 7 is a connection diagram of an optical amplifier with the present device illustrated in Fig. 6;
Figs. 8A through 8D are waveform diagrams showing optical amplification characteristics against lack wavelength by the present device illustrated in Fig. 7;
Fig. 9 is a block diagram of a wavelength detection supplement means illustrated in Fig. 6, according to a first embodiment of a wavelength detection supplement means;
Fig. 10 is a partial block diagram of a wavelength detection supplement means illustrated in Fig. 9, according to a first embodiment of the partial portion of the wavelength detection supplement means;
Fig. 11 is a partial block diagram of a wavelength detection supplement means according to a second embodiment different from the means illustrated in Fig. 10;
Fig. 12 is a partial block diagram of a wavelength detection supplement means illustrated in Fig. 6, according to a third embodiment of the partial portion of the wavelength detection supplement means;
Fig. 13 is a block diagram of a wavelength detection supplement means illustrated in Fig. 6, according to a second embodiment of the wavelength detection supplement means.

### Description of the Preferred Embodiment:

Hereafter, description will be made about embodiments of this invention with reference to the drawings.

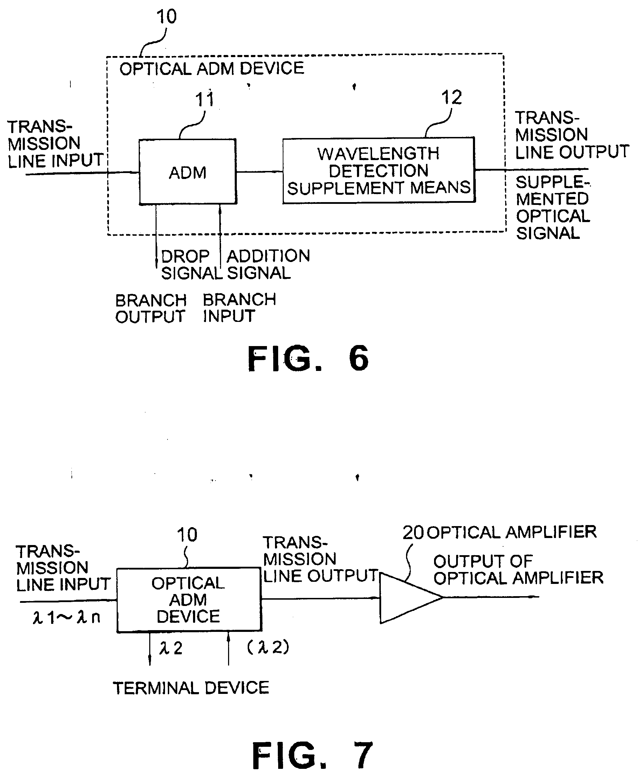

Referring to Fig. 6, an optical ADM device according to a basic embodiment of the invention is used to a branching node and comprises an ADM (add-drop multiplexer) 11 and a wavelength detection supplement means 12.

The different point from the conventional device described above is that the wavelength detection supplement means 12 is added to the ADM 11. The ADM 11 may be the same composition and has the same function with the ADM 110 illustrated in Fig. 3.

The ADM 11 receives an optical multiplexed signal of "n" pieces of wavelengths from a transmission line input and extracts an optical signal of a predetermined wavelength becoming a drop signal to a branch output from the received signal. Consequently, the ADM 11 inserts an optical signal of the wavelength becoming an addition signal received from a branch input and outputs to the wavelength detection supplement means 12.

The wavelength detection supplement means 12 detects any wavelength lack information, such as the lacking wavelengths or the lack number of wavelengths, from the optical wavelength multiplexed signal received from the ADM 11. Consequently, the wavelength detection supplement means 12 adds at least one wavelength so as to supplement any variation of signal levels corresponding to the lacking wavelengths and sends out the supplemented optical signal. The supplement optical signal includes a predetermined meaning of supplement, for example.

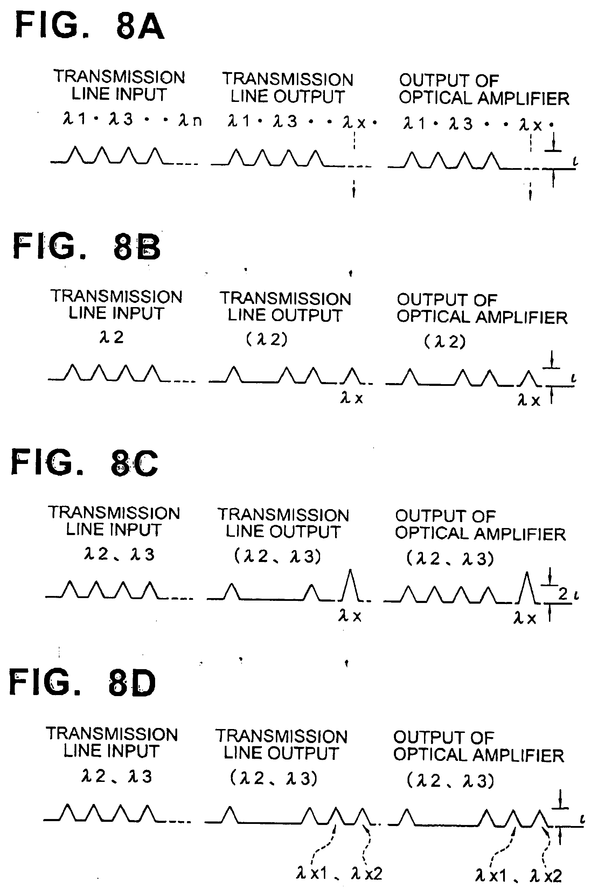

Referring to Fig. 7 and 8A through 8D, a description will be made about a transmission line output of the optical ADM device 10 and about an output control of the optical amplifier 20.

As illustrated in Fig. 8A, in the case that an input optical signal of wavelengths λ1 through λn is output from the transmission line output as it is in the optical ADM device, the optical amplifier 20 outputs an output optical signal with wavelengths each of which amplified to the predetermined level "ℓ".

In the case illustrated in Fig. 8B that a wavelength λ2 lacks from the input optical signal of wavelengths λ1 through λn in the transmission line output, the optical ADM device 10 adds a signal of a wavelength λx that has the same wavelength level with the others, into the input optical signal. The optical ADM device 10 outputs an supplemented optical signal added the wavelength λx to the optical amplifier 20. The optical amplifier 20 amplifies the supplemented optical signal to the wavelength level "ℓ" and outputs it.

In the case illustrated in Fig. 8C that wavelengths λ2 and λ3 are lacking in the input optical signal of wavelengths λ1 through λn in the transmission line output, the optical ADM device 10 adds a signal of a wavelength λx that has the two times of the same wavelength level as the others into the input optical signal. The optical ADM device 10 outputs a supplemented optical signal adding the wavelength λx to the optical amplifier 20. The optical amplifier 20 amplifies the supplemented optical signal to the wavelength level "2ℓ" for the wavelength λx and level "ℓ" for the others and outputs an output optical signal.

In the case illustrated in Fig. 8D that wavelengths λ2 and λ3 are lacking from the input optical signal of wavelengthS λ1 through λn in the transmission line output, the optical ADM device 10 adds two wavelength λx1 and λx2 that have the same level with the other wavelengths. The optical ADM device 10 produces a supplemented optical signal that is added the two wavelengths and have wavelengths of the predetermined number "n" and sends out to the optical amplifier 20. The optical amplifier 20 amplifies the supplemented optical signal to the wavelength level "ℓ" respectively, and outputs an output optical signal.

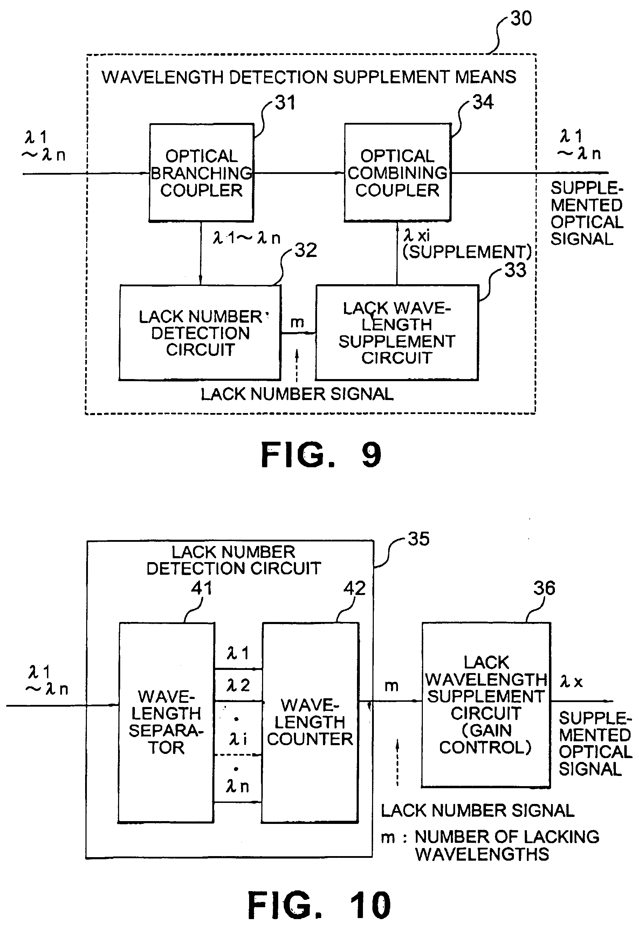

Referring to Fig. 9 and additionally to Figs. 6 through 8D, description will be made about a first embodiment of the wavelength detection supplement means 12 in Fig. 6.

In this embodiment, a wavelength detection supplement means 30 receives an optical signal of wavelengths λ1 through λn from an ADM and sends out an supplement optical signal to an optical amplifier. And the wavelength detection supplement means 30 comprises an optical branching coupler 31, a lack number detection circuit 32, a lack wavelength supplement circuit 33, and an optical combining coupler 34.

The optical branching coupler 31 branches the optical signal of wavelengths λ1 through λn sent from an ADM into two ways of both the lack number detection circuit 32 and the optical combining coupler 34. The lack number detection circuit 32 detects a number "m" of wavelengths lacking in the optical signal of wavelengths λ1 through λn sent through one way from the optical branching coupler 31 and sends out a lack number signal including the number "m". The lack wavelength supplement circuit 33 produces a supplement optical signal of a wavelength λxi which supplements a variation of the wavelength level that varies in the cause of the lacking-number "m", and sends the supplement optical signal to the optical combining coupler 34. The optical combining coupler 34 combines the supplement optical signal of wavelength λxi sent from the lack wavelength supplement circuit 33 and the optical signal of wavelengths λ1 through λn excepting lacking wavelength(s) (for example, λi) branched through the other way from the optical branching coupler 31, and produces a supplemented optical signal of wavelengths λ1 through λn so as to send out to the transmission line output.

Referring to Fig. 10 and additionally to Fig. 9, description will be made about a first embodiment of a partial portion of the wavelength detection supplement means, that is a lack number detection circuit 35 and a lack wavelength supplement circuit 36. The lack number detection circuit 35 is provided instead of the lack number detection circuit 32 in Fig. 9, and the lack wavelength supplement circuit 36 is instead of the lack wavelength supplement circuit 33 in Fig. 9. Accordingly, the lack number detection circuit 35 receives the optical signal sent from the optical branching coupler 31 and the lack wavelength supplement circuit 36 sends out a supplement optical signal to the optical combining coupler 34.

The lack number detection circuit 35 comprises a wavelength separator 41 and a wavelength counter 42. The wavelength separator 41 separates the input optical signal into individual wavelengths λ1 through λn respectively and sends out the separated optical signals of individual wavelengths to the wavelength counter 42. The wavelength counter 42 sets a predetermined number "n" of the wavelengths, subtracts a counter number of the separated optical signals from the predetermined number "n", and produces a lack number signal included lacking-number "m" of the wavelengths to send to the lack wavelength supplement circuit 36 in this case. The counter number is a number of the separated optical signals, each of which has one wavelength sent from the wavelength separator 41.

The lack wavelength supplement circuit 36 sends out an supplement optical signal of a predetermined wavelength λx made to "m" times of wavelength level "ℓ" that each of wavelengths λ1 through λn has in order to obtain the same transmission line output as shown in Fig. 8C. Accordingly, the lack wavelength supplement circuit 36 can execute a supplement of the same signal level against the variation of signal levels caused for the sake of the "m" lacking wavelengths each of which has level "ℓ".

It is preferable that the predetermined wavelength λx described above is one of the lacking wavelengths. However, the wavelength λx may be any one multiplexed except the wavelengths λ1 through λn.

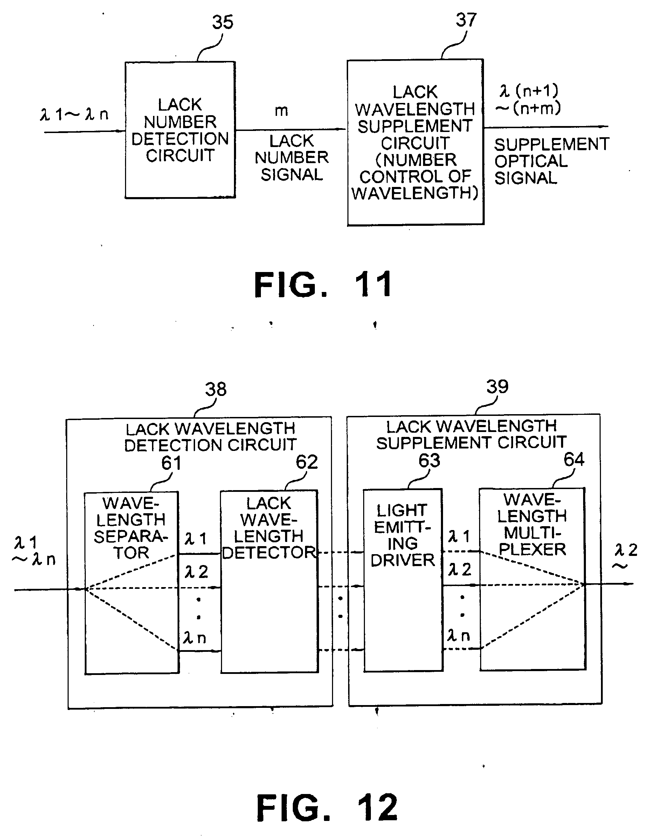

Referring to Fig. 11 and additionally to Figs. 9 and 10, description will be made about a second embodiment of a partial portion of the wavelength detection supplement means wherein a lack wavelength supplement circuit 37 in Fig. 11 is provided instead of the lack wavelength supplement circuit 36 in Fig. 10. The lack number detection circuit 35 is the same circuit as described above.

The lack wavelength supplement circuit 37 produces a supplement optical signal of "m" pieces of predetermined wavelengths λ(n+1) through λ(n+m), and sends out the supplement optical signal. Each of the wavelengths λ(n+1) cough λ(n+m) has a level "ℓ" and is any one except wavelengths λ1 through λn in order to obtain the same transmission line level that wavelengths λx1 and λx2 illustrated in Fig. 8D have respectively. Accordingly, the lack wavelength supplement circuit 37 can execute the supplement of a variation of "m" lacking-wavelength levels.

In this description, although the "m" pieces of the predetermined wavelengths are ones except wavelengths λ1 through λn, it is preferable that the "m" wavelengths to supplement uses the lacking ones by reason of avoidance of enlargement of the frequency band width.

Referring now to Fig. 12 and additionally to Fig. 9, description will be made about a third embodiment of a partial portion of the wavelength detection supplement means 30 in Fig. 9.

In the Fig. 12, a lack wavelength detection circuit 38 and a lack wavelength supplement circuit 39 are provided instead of the lack number detection circuit 32 and the lack wavelength supplement circuit 33 in Fig. 9. Accordingly, the lack wavelength detection circuit 38 receives the input optical signal sent from the optical branching coupler 31 in Fig. 9, and the lack wavelength supplement circuit 39 sends out a supplement optical signal to the optical combining coupler 34 in Fig. 9.

The lack wavelength detection circuit 38 comprises a wavelength separator 61 and a lacking wavelength detector 62. The wavelength separator 61 separates wavelengths λ1 through λn respectively from the optical signal input and sends out the separated optical signals to the lack wavelength detector 62 as the same as the wavelength separator 41 in Fig. 10. The lack wavelength detector 62 produces a lack wavelength information for driving indication of lacking wavelengths that the lack wavelength detector 62 cannot receive by reason of lacking from predetermined wavelengths λ1 through λn respectively. And the lack wavelength detector 62 sends the lack wavelength information to the lack wavelength supplement circuit 39 to be driven. For example in Fig. 12, the lack wavelength information includes a driving indication of a wavelength λ2 only.

The lack wavelength supplement circuit 39 comprises a light emitting driver 63 and a wavelength multiplexer 64. The light emitting driver 63 has light emitting elements such as laser diodes corresponding, to wavelengths λ1 through λn respectively. The light emitting elements are driven according to the indication of the lack wavelength information sent from the lack wavelength detection circuit 38, and generate light emitting element output signals for individual wavelengths driven and having predetermined wavelength level "ℓ" respectively. And the light emitting driver 63 sends out the light emitting element output signals to the wavelength multiplexer 64. The wavelength multiplexer 64 multiplexes the light emitting element output signals sent from the light emitting driver 63 and produces a supplement optical signal. For example in Fig. 12, the light emitting element output signal includes a wavelength λ2 only output.

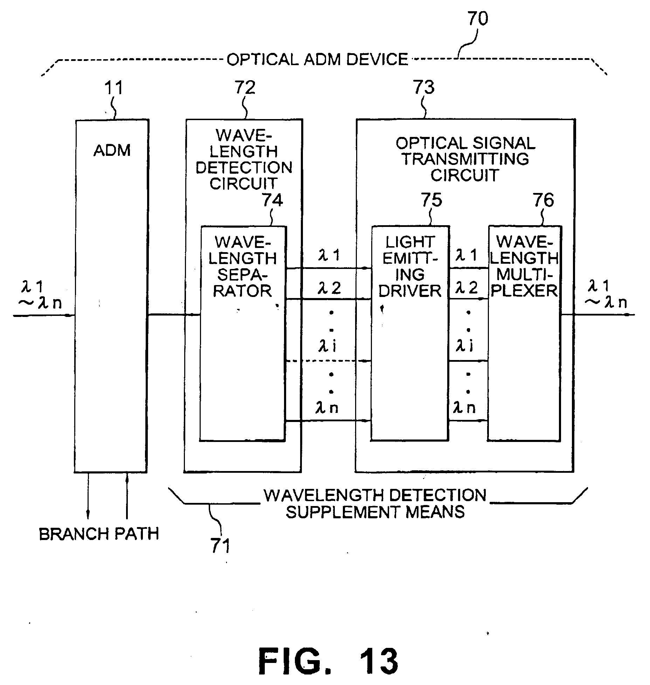

Referring to Fig. 13, description will be made about a second embodiment of the wavelength detection supplement means 12 in Fig. 6. As illustrated in Fig. 13, a wavelength detection supplement means 71 of an optical ADM device 70 which further comprises an ADM 11 illustrated in Fig. 6 and described already.

The wavelength detection supplement means 71 comprises a wavelength detection circuit 72 and an optical signal transmitting circuit 73.

The wavelength detection circuit 72 has a wavelength separator 74 that separates the optical signal sent from the ADM 11 into individual wavelengths λ1 through λn respectively, and sends out the separated optical signals to the optical signal transmitting circuit 73.

The optical signal transmitting circuit 73 comprises a light emitting driver 75 and a wavelength multiplexer 76. The light emitting driver 75 has light emitting elements such as laser diodes corresponding to individual wavelengths λ1 through λn respectively.

The light emitting driver 75 receives the separated optical signals corresponding to wavelengths λ1 through λn, respectively from the wavelength detection circuit 72. By the separated optical signal, the light emitting driver 75 regenerates the optical signals of all of the wavelengths each of which has a predetermined wavelength level "ℓ" respectively and sends out the regenerated optical signals to the wavelength multiplexer 76 by laser lights. In case that the wavelength λi does not exist in input of the light emitting driver 75, an optical signal of the wavelength λi generates by the same condition with the other wavelengths at the same time when the other wavelengths regenerates in the light emitting driver 75. And the light emitting driver 75 sends out all of the wavelengths λ1 through λn respectively with the same condition to the wavelength multiplexer 76. And the wavelength multiplexer 76 multiplexes the emitted optical signals of the all wavelengths λ1 through λn sent from the light emitting driver 75 and sends out the supplemented optical signal multiplexed to the transmission line output.

As described above, the optical wavelength multiplexed device with ADM or the optical ADM device 10 illustrated in Fig. 6 according to this invention makes it possible to provide an optical signal having a stable wavelength level to an optical amplifier by addition of simple wavelength detection supplement means 12 to the conventional device or ADM 11, even if a number of wavelengths of optical wavelength multiplexed signal lacks for the predetermined number in output of the ADM 11.

The reason is that a wavelength detection supplement means 12 is additionally supplied to the ADM 11. The wavelength detection supplement means 12 detects wavelengths sent from the ADM 11 and obtains lack wavelength information in case of lacking for a predetermined wavelength number. And the wavelength detection supplement means 12 adds at least one wavelength that can supplement the variation of signal level caused for the sake of lack wavelengths to the optical signal with lacking wavelengths. As the result, it is possible to make wavelength levels of transmission signals transmitted from the optical ADM device 10 to the optical amplifier stabilize. Accordingly, there is no need for any additional feature or modification against the conventional ADM and the optical amplifier.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

An optical wavelength multiplex device comprising an ADM (add-drop multiplexer), 11, that is, an optical ADM device comprises additionally wavelength detection supplement means 12 to the ADM. The ADM extracts an optical signal of a particular wavelength only from an optical wavelength multiplexed signal, and adds an optical signal of the same wavelength as the above at the same time. Further, the wavelength detection supplement means detects the number of wavelengths or lacking wavelengths in the case of missing of the wavelengths for the predetermined number included in the optical signal received from the ADM to produce a lack information of the wavelengths. And according to the lack information, the above means further produces a supplemented optical signal added at least one wavelength so as to supplement any variation for signal level caused by the lack of wavelengths.

## Claims

1. An optical wavelength multiplex device, comprising an ADM (add-drop multiplexer) (11) operable to extract only an optical signal of a particular wavelength from an input optical wavelength multiplexed signal and to add an optical signal of the same wavelength extracted, and an output optical amplifier for producing an output optical signal, characterized in that said optical wavelength multiplex device further comprises a wavelength detection supplement means (12), detecting, whether or not input wavelengths included in the optical signal sent from the ADM are equal in number to a predetermined number, for producing a supplemented optical signal to which at least one wavelength is added so as to supplement a variation of signal level caused in the output optical amplifier by the lack of wavelengths.

2. An optical wavelength multiplex device as claimed in claim 1, characterized in that said wavelength detection supplement means comprises an optical branching coupler (31) responsive to optical signal sent from said ADM for branching first and second split optical signals;
a lack number detection circuit (32) responsive to the first split optical signal, for detecting the number of lacking wavelengths to produce a lack number signal representative of the number of the lacking wavelengths;
a lack wavelength supplement circuit (33) responsive to the lack number signal given from said lack number detection circuit for supplementing at least one wavelength corresponding to the number of the lacking wavelengths to produce a supplement optical signal which includes the at least one wavelength; and
an optical combining coupler (34) for combining the supplement optical signal with the second split optical signal to produce the coined optical signal.

3. An optical wavelength multiplex device as claimed in claim 2, characterized in that said lack number detection circuit is a lack number detection circuit (35) comprising:
a wavelength separator (41) for separating the optical signal into to individual wavelengths respectively, to produce separated optical signal of the individual wavelengths;
a wavelength counter (42), setting a predetermined number of the wavelengths, for subtracting a counter number of the separated optical signal from the predetermined number, to produce the lack number signal.

4. An optical wavelength multiplex device as claimed in claim 2, characterized in that said lack wavelength supplement circuit is a lack wavelength supplement circuit (36) sending out a signal of a wavelength which supplements a wavelength level that varies in the cause of the lack number.

5. An optical wavelength multiplex device as claimed in claim 2, characterized in that said lack wavelength supplement circuit is a lack wavelength supplement circuit (37) generating and sending out optical signal of predetermined wavelengths which are different from one another and each of which has a predetermined level and supplements wavelength levels of variation caused by the lack number.

6. An optical wavelength multiplex device as claimed in claim 1, characterized in that said wavelength detection supplement means comprises said optical branching coupler responsive to optical signal sent from said ADM for splitting first and second split optical signal;
a lack wavelength detection circuit (38) responsive to the first split optical signal for detecting lacking wavelengths in the first split optical signal to produce lack wavelength information representative of the lacking wavelengths in the first split optical signal;
a lack wavelength supplement circuit (39) responsive to the lack wavelength information for supplementing the lacking wavelengths to a predetermined level to produce a wavelength multiplexed supplement optical signal which includes the lacking wavelengths; and
said optical combining coupler for combining the wavelength multiplexed supplement optical signal with the second split optical signal to produce a combined optical signal.

7. An optical wavelength multiplex device as claimed in claim 6, characterized in that said lack wavelength detection circuit comprises a wavelength separator (61) responsive to the first split optical signal for separating the first split optical signal into each of separated wavelengths included in the first split optical signal; and
a lack wavelength detector (62) for detecting the lacking wavelengths from the separated wavelengths to produce the lack wavelength information.

8. An optical wavelength multiplex device as claimed in claim 6, characterized in that said lack wavelength supplement circuit comprises a light emitting driver (63), having light emitting elements corresponding to all of wavelengths respectively, for driving the light emitting elements indicated by the lack wavelength information to produce light emitting element output signals; and
a wavelength multiplexer (64) for frequency multiplexing the light emitting element output signals.

9. An optical wavelength multiplex device as claimed in claim 1, characterized in that said wavelength detection supplement means is a wavelength detection supplement means (71) comprising:
a wavelength detection circuit (72) for separating the optical signal sent from the ADM into individual wavelengths; and
an optical signal transmitting circuit (73) responsive the individual wavelengths for regenerating optical signal corresponding to the lack wavelengths to produce a multiplexed optical signal which includes the optical wavelengths equal in number to the predetermined number.

10. An optical wavelength multiplex device as claimed in claim 9, characterized in that said optical signal transmitting circuit comprises a light emitting diver (75), having light emitting elements corresponding to all wavelengths, for receiving optical signal corresponding to wavelengths respectively from said wavelength detection circuit to emit optical signal corresponding to each of the wavelengths with predetermined level, to detect a lacking wavelength, and to produce the supplemented optical signal; and
a wavelength multiplexer (76) for multiplexing the supplemented optical signal.
